# EUROPÄISCHE PATENTANMELDUNG

(11) **EP 4 733 616 A1**
(43) Veröffentlichungstag der Anmeldung: **29.04.2026**
(21) Anmeldenummer: 24208366.5
(22) Anmeldetag: 23.10.2024
(51) Int. Cl.: F16D 7/02

(54) **ÜBERLASTKUPPLUNG**

(71) Anmelder: Flender GmbH, 46395 Bocholt (DE)
(72) Erfinder: JANSEN, Andre, 46395 Bocholt (DE)
(74) Vertreter: Michalski Hüttermann & Partner Patentanwälte mbB

(57) **Zusammenfassung**

Überlastkupplung 10 mit einer Längsachse A_{L}, insbesondere in einem Antriebsstrang 76 einer Windkraftanlage 100, umfassend ein erstes Kupplungsteil 12, das jeweils eine auf der Längsachse A_{L} senkrecht stehende Reibfläche 14 und Druckplatte 16 ausbildet, ein zweites Kupplungsteil 20 mit zumindest einer festverbundenen Nabenlamelle 22 und mehrere Reiblamellen 30, die paarweise zwischen der Reibfläche 14 und der Nabenlamelle 22 und zwischen der Nabenlamelle 22 und der Druckplatte 16 aufgenommen sind, wobei zwischen den paarweise angeordneten Reiblamellen 30 jeweils eine Reibscheibe 32 schwimmend gelagert angeordnet ist. Jeder der paarweisen Reiblamellen 30 macht lediglich den halben Reibweg, über den sie Reibleistung aufnehmen.

## Beschreibung

Die Erfindung betrifft eine Überlastkupplung mit einer Längsachse A_{L}, insbesondere in einem Antriebsstrang einer Windkraftanlage, mit einem ersten Kupplungsteil, das jeweils eine auf der Längsachse senkrecht stehende Reibfläche und Druckplatte ausbildet, einem zweiten Kupplungsteil mit zumindest einer festverbundenen Nabenlamelle und mehreren Reiblamellen, die paarweise zwischen der Reibfläche und der Nabenlamelle und zwischen der Nabenlamelle und der Druckplatte aufgenommen sind.

In Windkraftanlagen bzw. in dem Antriebsstrang der entsprechenden Windturbinen kommt es aufgrund von Netzabfällen oder rotorseitigen Dynamiken zu hohen Drehmomenten. Auftretende Drehmomentspitzen werden über Rutschkupplungen abgefangen, die in dem Antriebsstrang angeordnet sind, beispielsweise zwischen dem Getriebe und dem Generator. Das maximale Drehmoment wird damit abgekappt. Dies ist ein bewährtes Prinzip und wird in vielen Windturbinen eingesetzt. Bisherige Überlastkupplungen bzw. Rutschkupplungen sind jedoch in ihrer Energieaufnahme begrenzt. Bei größeren Rutschwinkeln werden diese Kupplungen heiß und können in der Folge frühzeitig ausfallen. Dies passiert speziell bei Windturbinen höherer Leistungsklasse und in Regionen mit instabilen Netzen, in den Windturbinen betrieben werden. Es besteht ein Bedarf die Leistung über einen Rutschwinkel absorbieren zu können.

Es ist die Aufgabe der Erfindung Maßnahmen aufzuzeigen, die es ermöglichen eine Überlastkupplung für eine Leistungsabsorbtion über einen größeren Rutschwinkel bereitzustellen.

Die Lösung der Aufgabe erfolgt durch eine Überlastkupplung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Überlastkupplung mit einer Längsachse A_{L}, insbesondere in einem Antriebsstrang einer Windkraftanlage, mit einem ersten Kupplungsteil, das jeweils eine auf der Längsachse senkrecht stehende Reibfläche und Druckplatte ausbildet, einem zweiten Kupplungsteil mit zumindest einer festverbundenen Nabenlamelle und mehreren Reiblamellen, die paarweise zwischen der Reibfläche und der Nabenlamelle und zwischen der Nabenlamelle und der Druckplatte aufgenommen sind, wobei zwischen den paarweise angeordneten Reiblamellen jeweils eine Reibscheibe schwimmend gelagert angeordnet ist, um einen Rutschweg zwischen den Kupplungsteilen auf die Reibscheiben leistungsverzweigt zu verteilen, vorzugsweise einen Rutschweg zwischen den Kupplungsteilen auf die Reibscheiben auf die Reibscheiben gleichermaßen aufzuteilen.

Es ist vorgesehen, dass die Nabenlamelle des zweiten Kupplungsteils radial zwischen das erste Reiblamellenpaar und das zweite Reiblamellenpaar hereinragt bzw. einsitzt. Die Nabenlamelle wird folglich von den Reiblamellenpaaren axial eingefasst. Jede axial zwischen den Reiblamellenpaaren einsitzende Reibscheibe kann sich grundsätzlich gegenüber den Reiblamellen, nach Überwinden eines herrschenden Reibmoments, drehen. Bevorzugt ist die eine Reiblamelle der paarweise angeordneten Reiblamellen mit der Reibfläche oder der Druckplatte verbunden und die andere Reiblamelle ist mit der Nabenlamelle verbunden. Zudem ist bevorzugt, dass das ersten Kupplungsteil das zweite Kupplungsteil im Wesentlichen radial umgibt.

Bei einer Drehung des ersten Kupplungsteils gegenüber dem zweiten Kupplungsteil bedeutet dieses aus Sicht eines Reiblamellenpaares, dass sich dessen Reiblamellen gegeneinander drehen können, wiederum nach Überwinden des herrschenden Reibmoments, indem
- sich entweder die Reiblamelle der Nabenlamellen gegenüber der Reibscheibe dreht oder
- sich die Reiblamellen der Reibfläche oder der Druckplatte gegenüber der Reibscheibe dreht oder
- sich jeweilige Relativdrehungen zwischen Reibfläche oder der Druckplatte und der Reibscheibe einerseits und der Nabenlamelle und der Reibscheibe andererseits
einstellen.

Der dritte dieser unterschiedenen Fälle ist der für die vorliegend beschriebene Ausführungsform der im Folgenden betrachtete und beschriebene. Wenn also beispielsweise das erste Kupplungsteil und das zweite Kupplungsteil eine Drehung von 360° zueinander ausführen, dann teilt sich diese 360°-Drehung, gleiche Reibungsverhältnis zwischen allen beteiligten Reibpartnern vorausgesetzt, zu gleichen Teilen auf in eine 180°-Drehung zwischen der Reibfläche bzw. Druckplatte und der Reibscheibe und eine weitere 180°-Drehung zwischen der Reibscheibe und der Nabenlamelle. Diese beiden Teildrehungen verhalten sich zueinander seriell, so dass sie sich zu der vollen Drehung von 360° der beiden Kupplungsteile zueinander ergänzten. Verglichen mit herkömmlichen Lösungen, bei den eine oder jede Reiblamelle die volle 360°-Drehung ausführen muss, führt bei der vorliegenden Ausführungsform jeder der beiden Reiblamellen lediglich den halben Reibweg aus, über den sie Reibleistung aufnehmen. Aufgrund des Zusammenhang *Reibleistung = Drehmoment × Reibweg* bedeutet dies für ein gegebenes Drehmoment, dass die absorbierte Reibleistung infolge des halbierten Reibweges für die betrachtete Reiblamelle ebenfalls nur 50% beträgt.

Bevorzugt sind die Reibscheiben umfänglich drehbar gegenüber dem ersten und zweiten Kupplungsteil angeordnet. Der Reibscheibe kommt demnach eine leistungsverzweigende Funktion zu und zwar indem die gesamte, zu absorbierende Reibleistung bezogen auf den erforderlichen Reibweg auf die beiden paarweise angeordneten Reiblamellen verteilt wird. Für die hier vorgenommene Betrachtung der 360°-Drehung, die sich zu gleichen Teilen in 180°-Drehungen verzweigt, teilen sich die paarweise angeordneten Reiblamellen den erforderlichen Reibweg. Die Reibscheiben können hierfür nach radial außen geeignet abgestützt sein, so dass sie während ihrer Umfangsbewegung zentriert bleiben. Insbesondere können die Reibscheiben zumindest gegenüber dem ersten Kupplungsteil über zumindest ein Gleitband radial geführt sein.

In einer bevorzugten Ausgestaltung ist die Druckplatte gegenüber einem Gehäuse des ersten Kupplungsteils über eine Verschraubung gehalten. Hierbei kann die Verschraubung insbesondere über mehrere umfänglich verteilt angeordnete Dehnschrauben ausgeführt sein. Über Dehnschrauben ist in vorteilhafterweise eine gleichbleibende Vorspannung auch bei einem fortschreitenden Verschleiß der Reiblamellen gewährleistet.

In einer weiteren bevorzugten Ausgestaltung ist zwischen dem ersten und dem zweiten Kupplungsteil zumindest ein Gleitband zur radialen Führung beider Kupplungsteile zueinander angeordnet.

Die Aufgabe wird zudem gelöst durch einen Antriebsstrang für eine Windkraftanlage zur drehmomentübertragenden Verbindung eines Rotors mit einem Generator, umfassend eine Hauptlagereinheit und einer Hauptwelle und ein über die Hauptwelle angetriebenes Getriebe, wobei das Getriebe und der Generator über eine wie zuvor beschriebene Überlastkupplung miteinander verbunden sind.

Ferner wird die Aufgabe gelöst durch eine Windkraftanlage, umfassend einen Rotorflansch mit einem Rotor und einen Generator, wobei ein an einem Maschinenträger gehaltener und den Rotorflansch mit dem Generator verbindender Antriebsstrang vorgesehen ist, wobei der Antriebsstrang wie beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage,
Fig. 2: eine mögliche Ausgestaltung einer Überlastkupplung für eine Windkraftanlage und
Fig. 3: eine schematische Darstellung des Funktionsprinzips der Überlastkupplung zur Drehmomentbegrenzung.

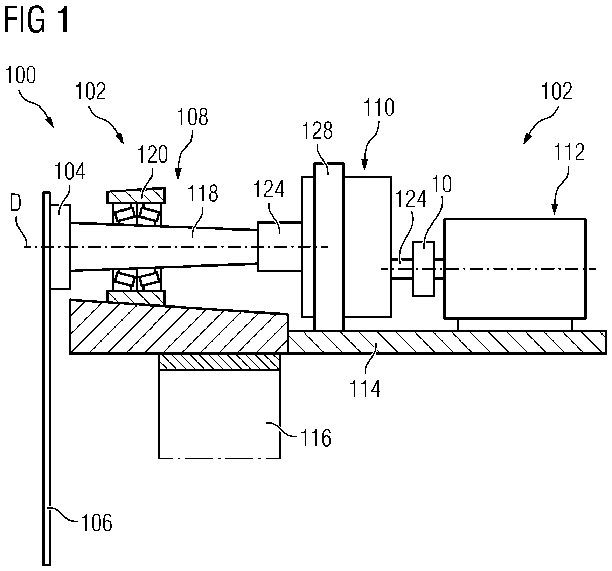

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 110 und einen Generator 112 umfasst. Über einen Maschinenträger 114 werden die Hauptlagereinheit 108, das Getriebe 110 und der Generator 112 über einen Turm 116 gegenüber dem, nicht dargestellten, Boden abgestützt.

Die Hauptlagereinheit 108 umfasst eine Hauptwelle 118, die gegenüber einem Lagergehäuse 120 der Hauptlagereinheit 108 drehbar um eine Drehachse D gelagert ist. An einem Ende der Hauptwelle 118 ist der Rotorflansch 104 und an diesem der Rotor 106 gehalten. Das andere Ende der Hauptwelle 118 ist antriebsmäßig mit dem Getriebe 110 verbunden, um ein von dem Rotor 106 aufgebrachtes Antriebsmoment in das Getriebe 110 einzuleiten. Das Getriebe 110 ist über eine Drehmomentstütze 128 mit dem Maschinenträger 114 verbunden und kann als Planetengetriebe mit einer oder mehreren Planetenstufen ausgeführt sein. Das Getriebe 110 ist über eine Generatorwelle 124 antriebsmäßig mit dem Generator 112 verbunden. Mit dem Bezugszeichen 10 ist eine Überlastkupplung bezeichnet, über die auftretende Drehmomentsitzen abgefangen werden können.

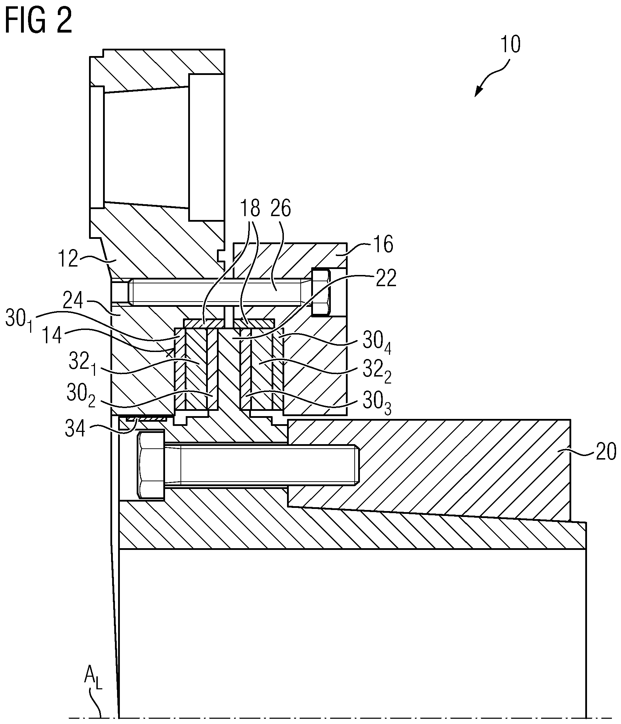

Die Figur 2 zeigt eine mögliche Ausgestaltung einer Überlastkupplung 10. Die Überlastkupplung 10 besteht strukturell aus einem ersten Kupplungsteil 12 und einem zweiten Kupplungsteil 20. Beide Kupplungsteile 12, 20 sind um eine Längsachse A_{L} zentrisch angeordnet. Das erste Kupplungsteil 12 umgibt das zweite Kupplungsteil 20 im Wesentlichen radial. Das zweite Kupplungsteil 20 bildet eine radial abstehende Nabenlamelle 22 aus, die in das erste Kupplungsteil 12 hineinragt und von diesem axial umfasst ist. Die Nabenlamelle 22 ist fest mit dem zweiten Kupplungselement 20 verbunden oder auch fest an dieses angeformt.

Das erste Kupplungsteil 12 ist vorliegend aus einem Gehäuse 24 und einer Druckplatte 16 in axialer Richtung zusammengesetzt. Die Druckplatte 16 ist gegenüber dem Gehäuse 24 des ersten Kupplungsteils 12 über eine Verschraubung 26 gehalten, wobei die Verschraubung 26 bevorzugt über mehrere umfänglich verteilt angeordnete Dehnschrauben 28 ausgeführt ist.

Die Nabenlamelle 22 des zweiten Kupplungsteils 20 ragt zwischen dem Gehäuse 24 und der Druckplatte 16 radial in das erste Kupplungsteil 12. Das Gehäuse 24 bildet auf der der Druckplatte 16 zugewandten Seite eine Reibfläche 14 aus. Zwischen der Reibfläche 14 und der Druckplatte 16 sind neben der Nabenlamelle 22 vier Reiblamellen 30₁ bis 30₄ und zwei Reibscheiben 32₁, 32₂ angeordneten. Diese Anordnung ist derart getroffen, dass jeweils eine Reiblamelle 30₁ auf der Reibfläche 14, eine Reiblamelle 30₄ auf der Druckplatte 16 und jeweils ein Reiblamelle 30₂ und 30s auf den Axialflächen der Reiblamelle 30 angeordnet sind. Die Reiblamellen 30₁, 30₂ sind somit zwischen Reibfläche 14 und Nabenlamelle 30 einerseits und die Reiblamelle 30₃, 30₄ zwischen Nabenlamelle 30 und Druckplatte 16 andererseits paarweise angeordnet. Zwischen diesen paarweise angeordneten Reiblamellen 30₁, 30₂ und 30₃, 30₄ ist jeweils eine Reibscheibe 32₁, 32₂ schwimmend gelagert angeordnet.

Die Reibscheiben 32₁, 32₂ sind umfänglich drehbar gegenüber dem ersten und zweiten Kupplungsteil 12, 20 angeordnet, wobei sie vorliegend zumindest gegenüber dem ersten Kupplungsteil 12 über jeweils ein Gleitband 18 radial geführt sind. Ein weiteres Gleitband 34 ist zwischen dem ersten und dem zweiten Kupplungsteil 12, 20 zur radialen Führung beider Kupplungsteile 12, 20 zueinander angeordnet.

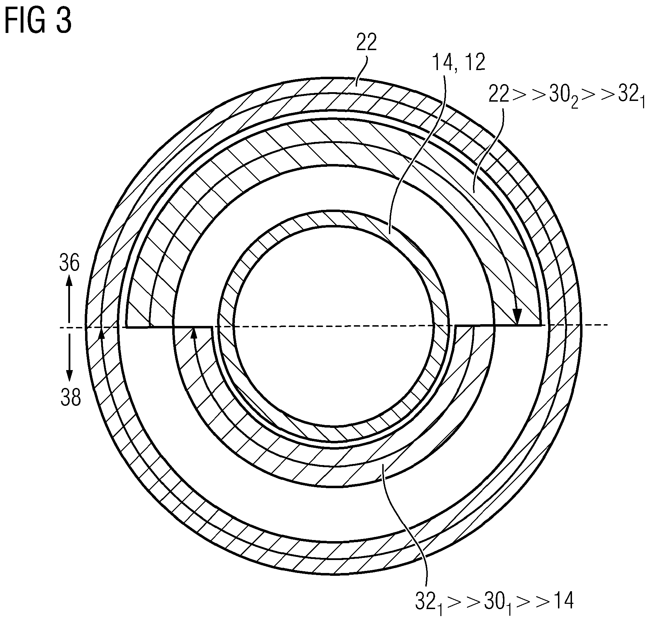

Anhand der Figur 3 wird das Funktionsprinzip der Überlastkupplung 10 erläutert, um Drehmomentspitzen abzufangen. Betrachten werden im Folgenden das erste Kupplungsteils 12 mit der Reiblamelle 30₁, die Reibscheibe 32₁ und die Nabenlamelle 22 mit der Reiblamelle 30₂ des zweiten Kupplungsteils 20. Es wird von einer 360°-Drehung zwischen erstem und zweiten Kupplungsteil 12, 20 ausgegangen, wobei das ersten Kupplungsteil 12 als stillstehend angesehen wird und die 360°-Drehung vollständig durch eine Drehung des zweiten Kupplungsteils 20 erfolgt. Es wird weiterhin davon ausgegangen, dass ideale und gleiche Reibverhältnisse zwischen den Reibpartnern herrschen. Dies bedeutet, dass ein an dem zweiten Kupplungsteil 20 anliegendes Drehmoment gleichzeitig die bestehende Haftreibung zwischen den Reibpartners überwindet und die jeweiligen Reibpartner eine Relativdrehung zueinander beginnen. Zwischen allen Reibpartnern herrscht folglich während der Drehung der gleiche Schlupf. Die Figur 3 ist in eine obere Bildhälfte 36 und eine untere Bildhälfte 38 unterteilt, was durch die Pfeile mit den entsprechenden Bezugszeichen symbolisiert ist.

In der oberen und der unteren Bildhälfte 36, 38 sind die Nabenlamelle 22 - außen - und die Reibfläche 14 des ersten Kupplungsteils 12- innen - dargestellt. Nur in der oberen Bildhälfte 36 ist die der Nabenlamelle 22 zugewandte Stirnfläche der Reibscheibe 32₁ dargestellt. Nur in der unteren Bildhälfte 38 ist die der Reibfläche 14 zugewandte Stirnfläche der Reibscheibe 32₁ dargestellt. Jeweils Drehungen symbolisierende Pfeile sind für die Nabenlamelle 22 und für die Reibscheibe 32₁ eingezeichnet. Die Reibfläche 14 des ersten Kupplungsteils 12 erfährt keine Drehung, deswegen ist dieser kein Pfeil zugeordnet.

Wenn nun die Nabenlamelle 22 ein Winkelmaß an Drehung gegenüber einer stillstehenden Reibfläche 14 ausführt, so erfährt die Reibscheibe 32₁ immer genau das halbe Winkelmaß dieser Drehung. Das Winkelmaß an Drehung der Nabenlamelle 22 - mit der Reiblamelle 30₂ - wird also hälftig auf die Reibpaarung bestehend aus Nabenlamelle 22 und Reibscheibe 32₁ einerseits und Reibscheibe 32₁ und Reibfläche 14 - mit der Reiblamelle 30₁ - andererseits aufgeteilt. Diese Reibpaarungen erfahren demnach bei einer 360°-Drehung der Nabenlamelle 22 bzw. des zweiten Kupplungsteils 20 gegenüber der Reibfläche 14 bzw. dem ersten Kupplungsteils 12 lediglich die halbe Relativdrehung bzw. legen nur den halben Reibweg zurück. Der Reibweg bzw. der Rutschweg der Reiblamellen 30, über die die Reibleistung absorbiert wird, wird folglich halbiert.

### Bezugszeichenliste

- 10: Überlastkupplung
- 12: Kupplungsteil
- 14: Reibfläche
- 16: Druckplatte
- 18: Gleitband
- 20: Kupplungsteil
- 22: Nabenlamelle
- 24: Gehäuse
- 26: Verschraubung
- 28: Dehnschraube
- 30: Reiblamellen
- 32: Reibscheibe
- 34: Gleitband
- 36: Bildhälfte
- 38: Bildhälfte
- 100: Windkraftanlage
- 102: Antriebstrang
- 104: Rotorflansch
- 106: Mehrblattrotor
- 108: Hauptlagereinheit
- 110: Getriebe
- 112: Generator
- 114: Maschinenträger
- 116: Turm
- 118: Hauptwelle
- 120: Lagergehäuse
- 122: Kupplung
- 124: Generatorwelle
- 126: Flansch
- 128: Drehmomentstütze

## Patentansprüche

1. Überlastkupplung (10) mit einer Längsachse (A_{L}), insbesondere in einem Antriebsstrang (76) einer Windkraftanlage (100), umfassend
ein erstes Kupplungsteil (12), das jeweils eine auf der Längsachse (A_{L}) senkrecht stehende Reibfläche (14) und Druckplatte (16) ausbildet,
ein zweites Kupplungsteil (20) mit zumindest einer festverbundenen Nabenlamelle (22) und
mehrere Reiblamellen (30), die paarweise zwischen der Reibfläche (14) und der Nabenlamelle (22) und zwischen der Nabenlamelle (22) und der Druckplatte (16) aufgenommen sind,
wobei zwischen den paarweise angeordneten Reiblamellen (30) jeweils eine Reibscheibe (32) schwimmend gelagert angeordnet ist, um einen Rutschweg zwischen den Kupplungsteilen (12, 20) auf die Reibscheiben (32) leistungsverzweigt zu verteilen.

2. Überlastkupplung (10) nach Anspruch 1, **dadurch gekennzeichnet, dass** die Reibscheiben (32) umfänglich drehbar gegenüber dem ersten und zweiten Kupplungsteil (12, 20) angeordnet sind.

3. Überlastkupplung (10) nach Anspruch 1 oder 2, **dadurch gekennzeichnet, dass** die Reibscheiben (32) zumindest gegenüber dem ersten Kupplungsteil (12) über zumindest ein Gleitband (18) radial geführt sind.

4. Überlastkupplung (10) nach einem der Ansprüche 1 bis 3, **dadurch gekennzeichnet, dass** die eine Reiblamelle (30₁, 30₄) der paarweise angeordneten Reiblamellen (30) mit der Reibfläche (14) oder der Druckplatte (16) verbunden ist und die andere Reiblamelle (30₃, 30₄) mit der Nabenlamelle (22) verbunden ist.

5. Überlastkupplung (10) nach einem der Ansprüche 1 bis 4, **dadurch gekennzeichnet, dass** die Druckplatte (16) gegenüber einem Gehäuse (24) des ersten Kupplungsteils (12) über eine Verschraubung (26) gehalten ist.

6. Überlastkupplung (10) nach Anspruch 5, **dadurch gekennzeichnet, dass** die Verschraubung (26) über mehrere umfänglich verteilt angeordnete Dehnschrauben (28) ausgeführt ist.

7. Überlastkupplung (10) nach einem der Ansprüche 1 bis 6, **dadurch gekennzeichnet, dass** das ersten Kupplungsteil (12) das zweite Kupplungsteil (20) im Wesentlichen radial umgibt.

8. Überlastkupplung (10) nach einem der Ansprüche 1 bis 7, **dadurch gekennzeichnet, dass** zwischen dem ersten und dem zweiten Kupplungsteil (12, 20) zumindest ein Gleitband (34) zur radialen Führung beider Kupplungsteile (12, 20) zueinander angeordnet ist.

9. Antriebsstrang (102) für eine Windkraftanlage (100) zur drehmomentübertragenden Verbindung eines Rotors (106) mit einem Generator (112), umfassend eine Hauptlagereinheit (108) und einer Hauptwelle (118) und ein über die Hauptwelle (118) angetriebenes Getriebe (110),
**dadurch gekennzeichnet, dass** das Getriebe (110) und der Generator (112) über eine nach den vorangegangenen Ansprüchen ausgebildete Überlastkupplung (10) miteinander verbunden sind.

10. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 9 ausgebildet ist.
